# EUROPÄISCHE PATENTSCHRIFT

(11) **EP 0 591 721 B1**
(45) Veröffentlichungstag und Bekanntmachung des Hinweises auf die Patenterteilung: **13.03.1996**
(21) Anmeldenummer: 93114793.8
(22) Anmeldetag: 15.09.1993
(51) Int. Cl.: B62D 21/02, B60R 19/02, B62D 21/15, B60R 19/56

(54) **Nutzfahrzeug, insbesondere Frontlenker-Lastkraftwagen**
Industrial vehicle, especially lorry with forward-mounted cab
Véhicule utilitaire, en particulier camion avec cabine à l'avant

(30) Priorität: 09.10.1992 DE 4234100
(43) Veröffentlichungstag der Anmeldung: 13.04.1994
(73) Patentinhaber: MAN Nutzfahrzeuge Aktiengesellschaft, D-80976 München (DE)
(72) Erfinder: Rieck, Gerhard, Dipl.-Ing., D-81247 München (DE); Mertens, Armin, D-80993 München (DE); Schmolly, Ingo, Dipl.-Ing. (FH), D-85757 Karlsfeld (DE)

(56) Entgegenhaltungen:
- CH-A- 301 316
- DE-A- 2 039 309
- DE-A- 3 808 813
- DE-A- 3 827 923
- DE-A- 4 103 782
- FR-A- 1 572 811
- FR-A- 2 241 023
- FR-A- 2 453 755
- FR-A- 2 667 839

## Beschreibung

Die Erfindung betrifft ein Nutzfahrzeug, insbesondere Frontlenker-Lastkraftwagen, mit Merkmalen der im Oberbegriff des Anspruchs 1 angegebenen Art.

Aus Fig. 1 jeder der beiden Offenlegungsschriften DE 38 08 812 A1 und DE 38 08 813 A1 ist ein Nutzfahrzeug ersichtlich, das frontseitig über einen in Rahmen-Längsrichtung beweglichen Stoßfänger verfügt. Dieser Stoßfänger ist bei der erstgenannten Offenlegungsschrift dahingehend ausgebildet, daß ein aufprallender Pkw zur Seite hin abgeleitetwerden kann. Bei der zweitgenannten Offenlegungsschrift ist eine Vorrichtung vorgesehen, mit der der Stoßfänger zur Verlängerung des Verformungsweges bei einem Pkw-Aufprall in Richtung der Fahrzeuglängsachse nach vorne ausfahrbar und/oder schwenkbar ausgestaltet ist. Beide Lösungen erfordern einen Aktivmechanismus zur entsprechenden Bewegungs-Steuerung des Stoßfängers. Ein solcher Aktivmechanismus mit Steuerung ist relativ teuer und setzt im Bereich hinter dem Stoßfänger auch entsprechend viel Platz für die Anlenkung der nötigen Betätigungsorgane voraus.

Die Erfindung geht gemäß dem Oberbegriff des Anspruches 1 aus von einem Stand der Technik wie aus der DE 38 27 923 A1 bekannt. Dort ist ein Passivmechanismus hinter dem Stoßfänger gegeben, der durch ein energieverzehrend ausgebildetes Fahrgestellvorderteil gebildet ist, wobei die Energieverzehrung beim Aufprall durch in Querrichtung V-förmig auseinanderstrebende Trägerteile am vorderen Ende jedes Rahmen-Längsträgers erfolgt.

Es ist demgegenüber Aufgabe der Erfindung, ein Nutzfahrzeug der eingangs genannten Art dahingehend auszubilden, daß die Folgeschäden am Nutzfahrzeug und Pkw bei einer Frontalkollision beider Fahrzeuge niedrig bleiben.

Diese Aufgabe ist bei einem Nutzfahrzeug der gattungsgemäßen Art durch die im Kennzeichen des Anspruches 1 angegebenen Maßnahmen gelöst.

Vorteilhafte Ausgestaltungen dieser Lösung sind in den Unteransprüchen angegeben.

Die Erfindung setzt dabei bereits an einer entsprechenden Gestaltung des Nutzfahrzeug-Vorderteiles und der dort gegebenen Rahmenlängsträger-Endbereiche an, dahingehend, daß im vorderen Bereich des Nutzfahrzeugs eine bauteil- bzw. aggregatfreie oder zumindest bauteilarme mit dann aber längsweich befestigten Bauteilen bzw. Aggregaten ausgestattete Knautschzone gegeben und außerdem jeder der beiden Rahmen-Längsträger an seinem vorderen Endbereich vertikal gegabelt ist. Dadurch ist sichergestellt, daß kein Baute bzw. Aggregat bei einer Frontalkollision des Nutzfahrzeuges mit einem Pkw ein starres Hindernis bilden kann. Außerdem ist dadurch, daß das untere Gabel-Teil vorne über einen oder mehrere in Höhe einer Pkw-Stoßstange angeordnete(n) Energieabsorber den Stoßfänger trägt, dagegen das obere Gabel-Teil der Gabelung in einer etwas über dem Normal-Niveau einer Pkw-Motorhaube gegebenen Höhe endet, sichergestellt, daß ein frontal aufprallender Pkw in den Frontbereich des Nutzfahrzeuges in die dort gegebene Knautschzone eintauchen kann und dabei vom Stoßfänger über den/die dahinter angeordneten Energieabsorber energieverzehrend abgefangen wird. Dadurch, daß der/die Energieabsorber in Höhe der Pkw-Stoßstange angeordnet ist/sind, ist bei einem Frontalaufprall eine sehr exakte Kraftwirklinie zwischen den nutzfahrzeugseitig und Pkw-seitig energieverzehrenden Organen gegeben. Die Auswirkungen eines Frontalaufpralles sind somit beidseitig einigermaßen klar definierbar im Hinblick auf die Verformung des Pkw- und Nutzfahrzeug-Frontbereichs. Aufgrund der im Nutzfahrzeug zumindest größtenteils außerhalb der Knautschzone oder längsweich angeordneten Bauteile sind außerdem Beschädigungen derselben bei in niedrigen Geschwindigkeitsbereichen stattfindenden Frontalkarambolagen zwischen Pkw und Nutzfahrzeug ganz vermeidbar.

Nachstehend ist die erfindungsgemäße Lösung anhand mehrerer in der Zeichnung dargestellter Ausführungsbeispiele näher erläutert. In der Zeichnung zeigen:

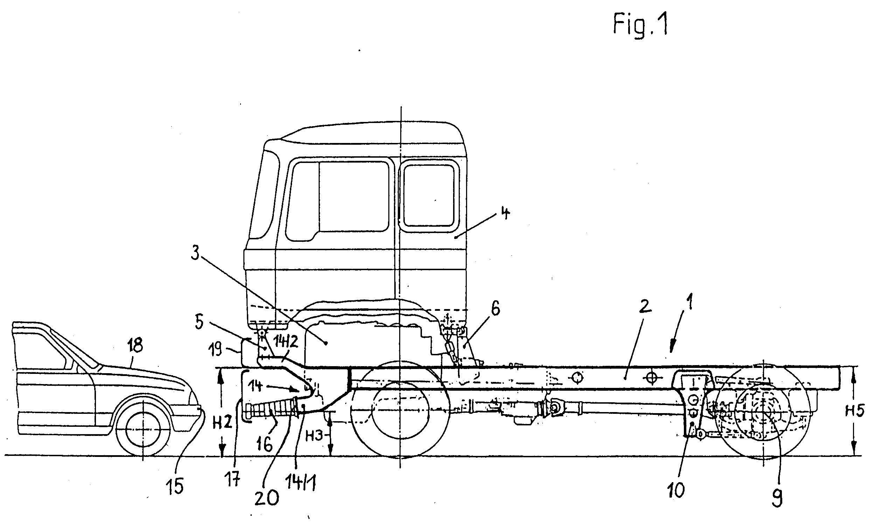

- Fig. 1 bis 6: in Seitenansicht weitgehend schematisiert je ein gemäß der Erfindung konzipiertes Nutzfahrzeug der Frontlenker-Bauart ohne Auf- und Anbauten.

In den Figuren sind gleiche bzw. einander entsprechende Bauteile mit gleichen Bezugszeichen angezogen.

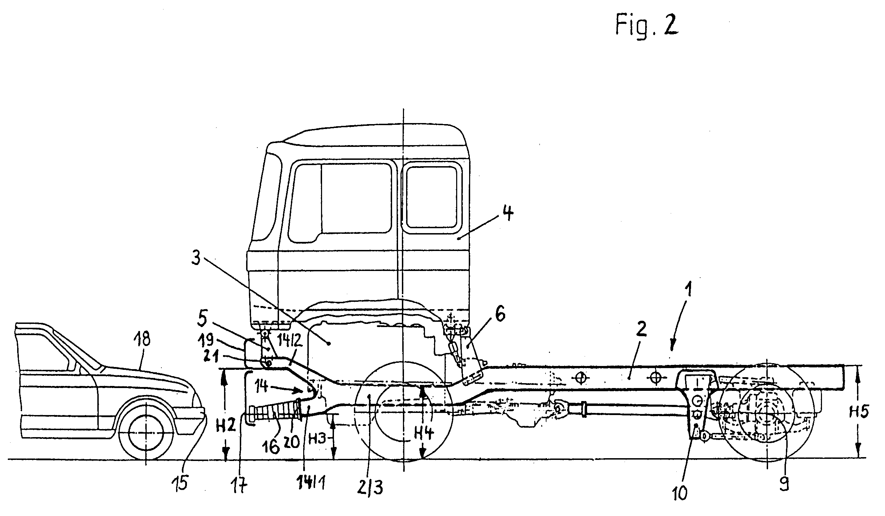

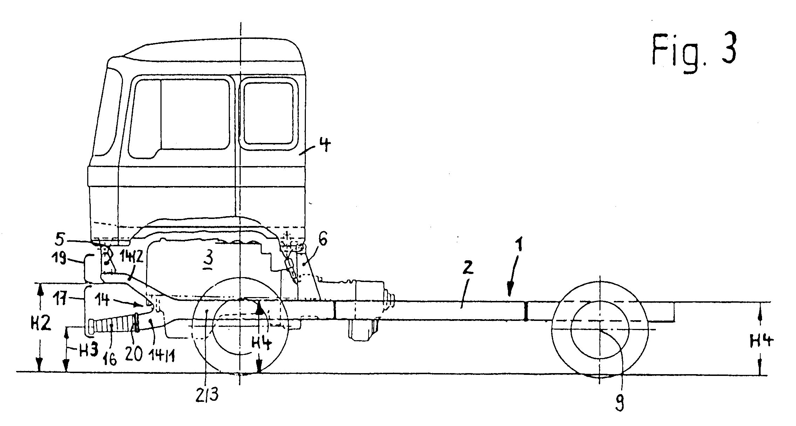

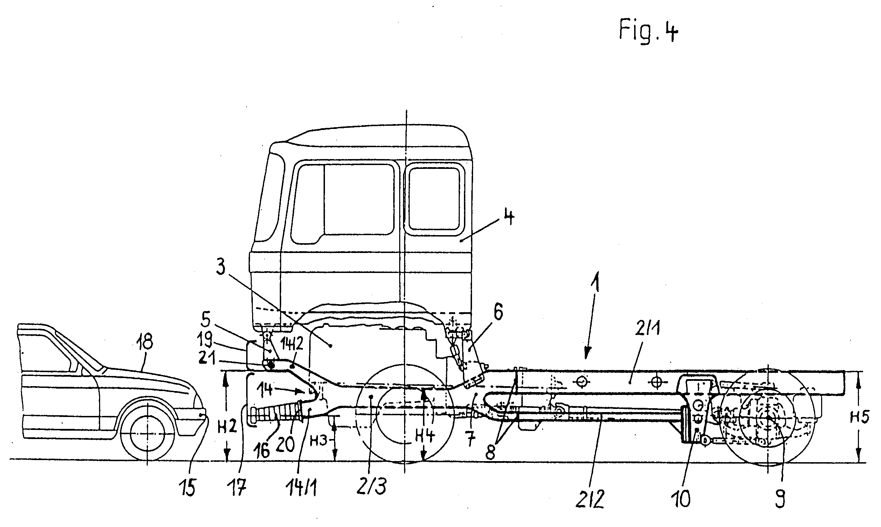

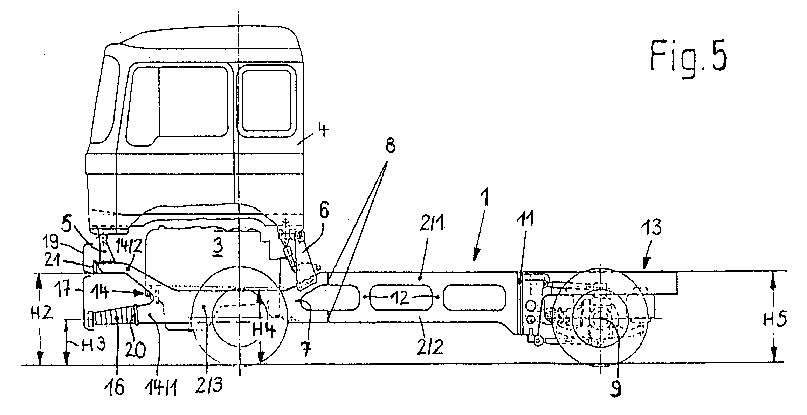

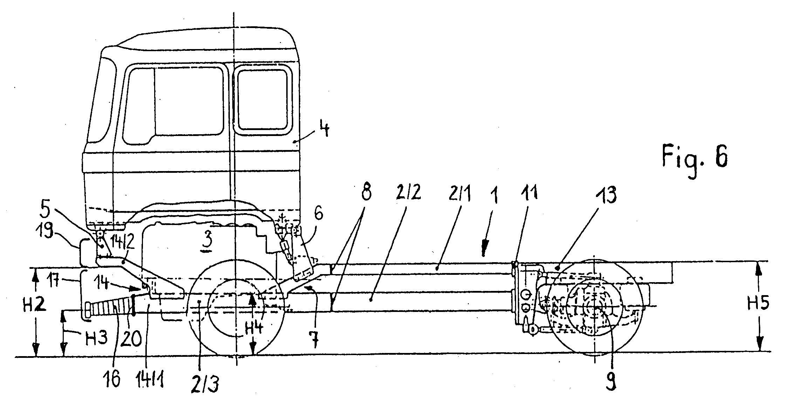

Das Nutzfahrzeug weist ein Fahrgestell 1 auf, dessen Rahmen aus zwei über Querträger verbundenen, im wesentlichen baugleich ausgebildeten Längsträgern 2 besteht. Zwischen beiden Längsträgern 2 und getragen von diesen ist ein Antriebsaggregat 3 angeordnet. Außerdem wird von den beiden Längsträgern 2 ein Fahrerhaus 4 über je einen vorderen und hinteren Lagerbock 5 bzw. 6 getragen. Jeder der beiden Längsträger 2 kann sich - wie aus Fig. 1 und 3 ersichtlich - in einer parallel zur Fahrbahn verlaufenden Ebene vom hinteren Rahmenende bis unter das Fahrerhaus 4 erstrecken. Der Abstand zwischen Fahrbahn und Längsträger-Oberkante ist dabei in Fig. 1 mit H5, in Fig. 3 mit H4 angegeben, welches Maß H4 gegenüber jenem H 5 eines herkömmlichen Nutzfahrzeug-Rahmens einen tiefer gelegten Rahmen bedeutet. Alternativ hierzu kann jeder Rahmen-Längsträger 2 - wie aus den Fig. 2 und 4 bis 6 ersichtlich - nur in seinem vorderen Abschnitt 2/3 auf das Niveau H4 abgesenkt sein, was eine Tieferlegung des Antriebsaggregates 3 und des Fahrerhauses 4 erlaubt. Im Fall gemäß Fig. 2 erstreckt sich jeder Rahmen-Längsträger 2 im hinter dem Fahrerhaus 4 gegebenen Fahrgestellbereich auf dem Höhenniveau H5, in den Fällen gemäß Fig. 4 bis 6 dagegen ist der mittlere Bereich jedes Längsträgers 2 in zwei Längsträger-Teile 2/1, 2/2 aufgelöst. Das Maß zwischen Fahrbahn und Oberkante oberem Längsträger-Teil 2/1 ist bei diesen Varianten in der Zeichnung mit H5 angegeben, welches Maß der üblichen Höhe eines Nutzfahrzeug-Rahmens entspricht. Die beiden Teile 2/1, 2/2 eines jeden Längsträgers sind dabei am oberen bzw. unteren Gabel-Teil einer Vertikal-Gabelung 7 angeschlossen, die am hinteren Ende des vorderen, tiefer gelegten Längsträger-Abschnittes 2/3 gegeben ist. Die entsprechenden Schnitt- bzw. Anschlußstellen sind in den betreffenden Figuren mit 8 angegeben. Das obere Teil 2/1 eines jeden Längsträgers 2 kann dabei - wie aus Fig. 4 ersichtlich - bis nach hinten zum Ende des Rahmens geführt sein oder bereits - wie aus Fig. 5 und 6 ersichtlich - vor der (ersten, vorderen) Hinterachse 9 enden. Das untere Teil 2/2 jedes so zweigeteilten Längsträgers 2 endet generell vor der (ersten, vorderen) Hinterachse 9 und ist dort entweder über einem Lagerschild 10 (Fig. 4) oder eine Anschlußplatte 11 (Fig. 5) oder Anschlußflansche (Fig. 6) mit dem zugehörigen oberen Teil des jeweiligen Längsträgers 2 und dem Fahrgestellheck 13 verbunden. Zur Erhöhung der Stabilität können die beiden Teile 2/1, 2/2 jedes zweigeteilten Längsträgers 2 - wie aus Fig. 5 ersichtlich - auch noch über Streben 12 miteinander verbunden sein. Im Fall der Ausführungsbeispiele gemäß Fig. 5 und 6 ist das Fahrgestell-Heck 13 alsvormontierter Modul, bestehend aus Rahmenende, Lagerschilden und daran angelenkter Hinterachse(n) 9, am davor gegebenen Fahrgestell-Abschnitt angeschlossen.

Generell weist das Nutzfahrzeug in seinem vorderen Bereich, bei einem Frontlenker unterhalb des Fahrerhauses 4, eine bauteil- bzw. aggregatfreie oder - sofern dies nicht möglich ist - eine zumindest bauteilarme und dann nur mit längsweich (in Längsrichtung nachgiebig) am Rahmen befestigten Bauteilen bzw. Aggregaten ausgestattete Knautschzone auf. In deren Bereich ist jeder der beiden Längsträger 2 unabhängig von seiner sonstigen Ausgestaltung an seinem vorderen Endbereich vertikal gegabelt. Diese Vertikalgabelung ist mit 14 bezeichnet. Dabei ist an den unteren Gabel-Teilen 14/1 der beiden Längsträger 2 vorne über einen oder mehrere in Höhe H3 einer Pkw-Stoßstange 15 (siehe Fig. 1, 2, 4) angeordnete(n), in Rahmen-Längsrichtung nachgiebige(n) Energieabsorber 16 ein Stoßfänger 17 abgestützt. Das obere Gabel-Teil 14/2 dagegen ist als Träger und für die Befestigung von Fahrzeugteilen bzw. -aggregaten, wie Fahrerhaus 4 (über Lagerböcke 5), Lenkgetriebe, Kühler, einem zweiten (oberen) Stoßfänger bzw. einer Frontverblendung 19 und dergleichen herangezogen. Außerdem enden die oberen Gabelteile 14/2 generell in einer etwas über dem Normalniveau einer Pkw-Motorhaube 18 gegebenen Höhe H2 und sind unterseitig so gestaltet, daß ein Pkw bei einer Kollision in diese so gegebene Nutzfahrzeug-Knautschzone eintauchen kann. Dabei kann die Unterkante jedes der beiden oberen Gabel-Teile 14/2 in Längsrichtung (wie dargestellt) beispielsweise wenigstens soweit parallel zur Fahrbahn verlaufen, daß bei einer Kollision mit einem Pkw durch diesen eine Verschiebung des Stoßfängers 17 in Rahmen-Längsrichtung bis zur Enddeformation des/der Energieabsorber 16 gewährleistet ist. Die vorderen Enden sowohl der jeweils oberen als auch der jeweils unteren Gabel-Teile 14/1, 14/2 können durch eine Quertraverse 20 bzw. 21 miteinander verbunden sein, die einerseits zur Erhöhung der Rahmen-Stabilität und andrerseits im Fall der Quertraverse 20 auch zur Verbesserung der Anschlußmöglichkeit für den/die Energieabsorber 16 dienen. Der energieabsorbierende Knautschzonen-Bereich des Nutzfahrzeuges kann auf verschiedene Weise realisiert sein. Beispielsweise kann der Stoßfänger 17 innen eine Querverstrebung aufweisen, an der der/die Energieabsorber 16 vorne abgestützt angeschlossen sind. Ferner ist es möglich, am unteren Gabel-Teil 14/1 jedes Längsträgers 2 einen eigenen Energieabsorber 16 anzuordnen. Alternativ hierzu ist es möglich, einen sich zumindest annähernd über die gesamte Länge/Fahrzeugbreite des Stoßfängers 17 hinter diesem erstreckenden Energieabsorber 16 in Blockform vorzusehen, der an den vorderen Enden der unteren Gabel-Teile 14/1 der beiden Längsträger 2 befestigt ist. Schließlich ist es auch möglich, daß der Stoßfänger 17 selbst als Energieabsorber ausgebildet oder als mit dem/den Energieabsorber(n) 16 vorgefertigtes Bauteil an den vorderen Enden der unteren Gabelteile 14/1 bzw. der dort gegebenen Quertraverse 20 befestigt ist. Zur Realisierung des/der Energieabsorber 16 ist jedes Material oder jede Vorrichtung denkbar, mit der die Energie eines frontal am Stoßfänger 17 aufprallenden Pkws, z. B. progressiv über den Weg gesehen verzehrbar ist.

Auch für die Herstellung der erfindungsgemäß gestalteten Längsträger 2 gibt es verschiedene Möglichkeiten. Im Fall gemäß Fig. 1 sind die Vertikalgabeln 14 als einstückige Blechpreßteile vorgefertigt und über Schraub-, Niet- oder Schweißverbindungen am zugehörigen Längsträger 2 angeschlossen. Im Fall gemäß Fig. 2 sind die Vertikalgabeln 14 einstückig mit dem jeweils als Blechpreßteil realisierten Längsträger 2 ausgebildet. Im Fall gemäß Fig. 3 ist jede Vertikalgabel 14 zusammen mit dem vorderen Längsträger-Abschnitt 2/3 durch ein einstückiges Blechpreßteil realisiert. Im Fall gemäß Fig. 4 und 5 ist jeder vordere Langsträger-Abschnitt 2/3 zusammen mit vorderer und der hinterer Vertikal-Gabelung 14 bzw. 7 als einstückiges Blechpreßteil realisiert. Im Fall gemäß Fig. 6 ist jeder vordere Längsträger-Abschnitt 2/3 mit vorderer und hinterer Vertikalgabelung 14 bzw. 7 durch eine Schweiß-, Niet- oder Schraubkonstruktion gebildet, wofür die jeweiligen Einzelteile vorzufertigen und dann entsprechend zusammenzufügen sind. Dabei sind die unteren Gabel-Teile 14/1 der vorderen und hinteren Vertikalgabel 14 bzw. 7 jeweils durch den Endbereich des tiefer gelegten vorderen Längsträger-Abschnittes 2/3 gebildet.

## Patentansprüche

1. Nutzfahrzeug, insbesondere Frontlenker-Lastkraftwagen, mit einem Fahrgestell, dessen Rahmen aus zwei über Querträger verbundenen Längsträgern besteht, ein Fahrerhaus trägt und frontseitig einen an einer energieverzehrenden Einrichtung angeschlossenen sowie in Höhe (H3) einer Pkw-Stoßstange (15) angeordneten und somit bei Kollision mit einem Personenkraftwagen in Rahmen-Längsrichtung nachgiebigen Stoßfänger (17) aufweist, dadurch gekennzeichnet, daß im vorderen Bereich des Nutzfahrzeuges, insbesondere unter dem Fahrerhaus, eine bauteil- bzw. aggregatfreie oder bauteilarme mit dann längsweich befestigten Bauteilen bzw. Aggregaten ausgestattete Knautschzone gegeben ist, in deren Bereich jeder der beiden Rahmen-Längsträger (2) an seinem vorderen Endbereich eine Vertikal-Gabelung (14) aufweist, an deren unterem Gabel-Teil (14/1) vorne über einen oder mehrere Energieabsorber (16) der Stoßfänger (17) abgestützt ist, während das obere Gabel-Teil (14/2) als Träger für Fahrzeugteile bzw.-aggregate, wie vordere Fahrerhauslager, Lenkgetriebe, Kühler, oberer Stoßfänger oder Frontverblendung (19) und dergleichen herangezogen ist sowie in einer etwas über dem Normalniveau einer Pkw-Motorhaube (18) gegebenen Höhe (H2) endet und unterseitig so gestaltet ist, daß ein Pkw bei einer Kollision in diese so gegebene Nutzfahrzeug-Knautschzone eintauchen kann.

2. Nutzfahrzeug nach Anspruch 1, dadurch gekennzeichnet, daß die Unterkante des oberen Gabel-Teiles (14/2) in Längsrichtung wenigstens soweit parallel zur Fahrbahn verläuft, daß bei einer Kollision mit einem Pkw durch diesen eine Verschiebung des Stoßfängers (17) in Rahmen-Längsrichtung bis zur Enddeformation des/der Energieabsorber (16) gewährleistet ist.

3. Nutzfahrzeug nach einem der vorhergehenden Ansprüche, dadurch gekennzeichnet, daß am unteren Gabel-Teil (14/1) jedes Rahmen-Längsträgers (2) ein eigener Energieabsorber (16) abgestützt ist.

4. Nutzfahrzeug nach einem der Ansprüche 1 und 2, dadurch gekennzeichnet, daß die unteren Gabel-Teile (14/1) der beiden Rahmen-Längsträger (2) einen an ihnen frontseitig angeschlossenen und sich zumindest annähernd über die gesamte Länge/Fahrzeugbreite des Stoßfängers (17) hinter diesem erstreckenden Energieabsorber (16) tragen.

5. Nutzfahrzeug nach einem oder mehreren der vorhergehenden Ansprüche, dadurch gekennzeichnet, daß die vorderen Enden der Gabel-Teile (14/1, 14/2) der Rahmen-Längsträger (2) jeweils durch eine Quertraverse (20, 21) miteinander verbunden sind, wobei an der unteren (20) der/die Energieabsorber (16) befestigt ist/sind.

6. Nutzfahrzeug nach Anspruch 1, dadurch gekennzeichnet, daß der Stoßfänger (17) selbst als Energieabsorber ausgebildet oder als mit dem/den Energieabsorber(n) (16) vorgefertigtes Bauteil an den vorderen Enden der unteren Gabelteile (14/1) bzw. einer dort gegebenen Quertraverse (20) befestigt ist.

7. Nutzfahrzeug nach einem der Ansprüche 1 bis 5, dadurch gekennzeichnet, daß der Stoßfänger (17) aus faserverstärktem Kunststoff besteht und innen eine Querverstrebung aufweist, an der der/die Energieabsorber (16) angeschlossen sind.

8. Nutzfahrzeug nach einem der vorhergehenden Ansprüche, dadurch gekennzeichnet, daß jeder Rahmen-Längsträger (2) zusammen mit oberem und unterem Gabel-Teil (14/1, 14/2) als Blechpreßteil realisiert ist.

9. Nutzfahrzeug nach einem der Ansprüche 1 bis 7, dadurch gekennzeichnet, daß jeder Rahmen-Längsträger (2) bzw. ein vorderer Abschnitt desselben und die beiden zugehörigen Gabel-Teile (14/1, 14/2) jeweils als eigenes Teil vorgefertigt wird und dann die beiden vorgefertigten Gabel-Teile am zugehörigen Längsträger (2) bzw. vorderen Längsträger-Abschnitt angeschweißt, angeschraubt oder angenietet werden.

10. Nutzfahrzeug nach einem der vorhergehenden Ansprüche, dadurch gekennzeichnet, daß das untere Gabelteil (14/1) durch den schräg, gerade oder bogenförmig nach unten verlaufenden vorderen Endbereich des jeweiligen Rahmen-Längsträgers (2) gebildet ist.

11. Nutzfahrzeug nach Anspruch 10, dadurch gekennzeichnet, daß das untere Gabelteil (14/1) durch den vorderen Endbereich eines gegenüber der im hinteren Fahrzeugabschnitt gegebenen Rahmenhöhe (H5) auf Höhe (H4) abgesenkten vorderen Rahmen-Abschnitts gebildet ist.

12. Nutzfahrzeug nach einem der Ansprüche 1 bis 9, dadurch gekennzeichnet, daß das untere Gabel-Teil (14/1) durch den vorderen Endbereich eines auf Höhe (H4) tiefer gelegten, parallel zur Fahrbahn verlaufenden Längsträgers (2) gebildet ist, an dem das obere Gabel-Teil (14/2) nach vorne oben abgehend entweder einstückig mit angeformt oder nach vorheriger Einzelherstellung angeschweißt, angeschraubt oder angenietet ist.

13. Nutzfahrzeug nach einem der vorhergehenden Ansprüche, dadurch gekennzeichnet, daß das obere Gabel-Teil (14/2) jedes Rahmen-Längsträgers (2) für die Befestigung von Fahrzeugteilen bzw. -aggregaten ausgebildet und oder mit entsprechenden Befestigungsorganen, wie Lagerböcken und dergleichen ausgestattet ist.

## Claims

1. A commercial vehicle, in particular a lorry tractor unit, with a chassis, the frame thereof comprising two longitudinal members connected via transverse members, supporting a driver's cab and having at the front a bumper (17) attached to an energy-dissipating means and arranged at the level (H3) of a passenger vehicle bumper (15) and, consequently, flexible in the longitudinal direction of the frame on collision with a passenger vehicle**, characterised in that** there is a crushing zone, without components or units or equipped with a few components or units secured to yield longitudinally, in the front area of the commercial vehicle, in particular below the driver's cab, that the front end area of each of the two longitudinal members (2) of the frame has a vertical forking (14) in the region of the crushing zone, that the bumper (17) is supported at the front of the lower fork component (14/1) of the vertical forking via one or a plurality of energy absorbers (16), while the upper fork component (14/2) is used as a support for vehicle components or units such as the driver's cab bearings, steering mechanism, radiator, upper bumper or front facing (19) and similar components, and terminates at a level (H2) slightly above the standard level of a passenger vehicle engine bonnet (18), and is shaped at the underside thereof in such a manner that during a crash a passenger vehicle can enter this commercial vehicle crushing zone thus provided.

2. A commercial vehicle according to Claim 1, **characterised in that** the lower edge of the upper fork component (14/2) extends in the longitudinal direction parallel to the road surface at least so far that during a crash with a passenger vehicle the upper fork component is used to displace the bumper (17) in the longitudinal direction of the frame up to the final deformation of the energy absorber(s) (16).

3. A commercial vehicle according to either of the preceding claims, **characterised in that** a separate energy absorber (16) is supported on the lower fork component (14/1) of each longitudinal member (2) of the frame.

4. A commercial vehicle according to Claims 1 and 2, **characterised in that** the lower fork components (14/1) of the two longitudinal members (2) of the frame support an energy absorber (16) attached to the front thereof and extending at least approximately across the entire length/ vehicle width of the bumper (17).

5. A commercial vehicle according to one or several of the preceding claims, **characterised** **in that** the front ends of the fork components (14/1, 14/2) of the longitudinal members (2) of the frame are connected to each other by a respective transverse member (20, 21), wherein the energy absorber(s) (16) is/ are secured to the lower member (20).

6. A commercial vehicle according to Claim 1, **characterised in that** the bumper (17) itself takes the form of an energy absorber or is secured, as a component prefabricated with the energy absorber(s) (16), to the front ends of the lower fork components (14/1) or a transverse member (20) provided there.

7. A commercial vehicle according to any one of Claims 1 to 5, **characterised in that** the bumper (17) consists of fibre-reinforced plastic, and the interior thereof has a transverse bracing with the energy absorber(s) (16) attached thereto.

8. A commercial vehicle according to any one of the preceding claims, **characterised in that** each longitudinal member (2) of the flame is produced in combination with the upper and lower fork component (14/1, 14/2) as a sheet metal stamping.

9. A commercial vehicle according to any one of Claims 1 to 7, **characterised in that** each longitudinal member (2) or front section of the frame and the two associated fork components (14/1, 14/2) are all prefabricated as respective separate components, and the two prefabricated fork components are subsequently welded, screwed or riveted to the associated longitudinal members (2) or front section thereof

10. A commercial vehicle according to any one of the preceding claims, **characterised in that** the lower fork component (14/1) is formed by the front end region of the respective longitudinal member (2) of the frame, and this end region extends downwards in an inclined, straight or curved manner.

11. A commercial vehicle according to Claim 10, **characterised in that** the lower fork component (14/1) is formed by the front end region of a front frame section lowered in relation to the frame level (H5) - provided at the rear of the vehicle - to the level (H4).

12. A commercial vehicle according to any one of Claims 1 to 9, **characterised in that** the lower fork component (14/1) is formed by the front end region of a longitudinal member (2) extending parallel to the road surface and being located at a lower level (H4), and the upper fork component (14/2) is formed integrally with, or is welded, screwed or riveted in accordance with the preceding single-part construction to the said longitudinal member so as to advance upwards.

13. A commercial vehicle according to any one of the preceding claims, **characterised in that** the upper fork component (14/2) of each longitudinal member (2) of the frame is formed for the securing of vehicle components or units and is equipped with appropriate fastening components such as bearing blocks.

## Revendications

1. Véhicule utilitaire notamment camion à cabine avancée comprenant un châssis dont le cadre se compose de deux longerons reliés par des traverses, portant une cabine et à l'avant un pare-chocs (17) souple dans la direction longitudinale du cadre, relié à une installation dissipant de l'énergie, à la hauteur (H3) d'un pare-chocs de véhicule de tourisme (15), et ainsi souple, en cas de collision avec un véhicule de tourisme, dans la direction longitudinale du cadre, caractérisé en ce que dans la zone avant du véhicule utilitaire, notamment sous la cabine du conducteur, il y a une zone d'écrasement sans équipements, ni accessoires ou avec peu d'équipements mais qui sont alors souples dans la direction longitudinale, et dans cet endroit, chacun des deux longerons (2) comporte dans sa zone d'extrémité avant, une fourche verticale (14) dont la partie inférieure de fourche (14/1) porte à l'avant, un pare-chocs (17) par l'intermédiaire d'un ou plusieurs dispositifs absorbant l'énergie (16) alors que la partie supérieure (14/2) de la fourche sert de support pour les pièces ou équipements du véhicule tels les paliers avant de la cabine, la transmission de direction, le radiateur, le pare-chocs avant ou l'écran frontal (19) ou des moyens analogues et à une hauteur (H2) située sensiblement au-dessus du niveau normal d'un capot (18) de véhicule de tourisme, cette fourche se termine et sa face inférieure est conçue pour qu'en cas de collision, le véhicule de tourisme puisse pénétrer dans cette zone d'écrasement du véhicule utilitaire.

2. Véhicule utilitaire selon la revendication 1, caractérisé en ce que le bord inférieur de la partie supérieure (14/2) de la fourche est parallèle à la chaussée dans la direction longitudinale, au moins suffisamment pour qu'en cas de collision avec un véhicule de tourisme, ce dernier puisse pousser le pare-chocs (17) dans la direction longitudinale du châssis jusqu'à la déformation finale du ou des dispositifs absorbant l'énergie (16).

3. Véhicule utilitaire selon l'une des revendications précédentes, caractérisé en ce que sur la partie inférieure (14/1) de la fourche de chaque longeron (2) s'appuie un dispositif absorbant l'énergie (16).

4. Véhicule utilitaire selon l'une des revendications 1 et 2, caractérisé en ce que les parties inférieures de fourche (14/1) des deux longerons (2) sont reliées du côté frontal des longerons et portent au moins sensiblement sur toute la longueur/largeur du véhicule au niveau des pare-chocs (17), des dispositifs absorbant l'énergie (16) situés derrière.

5. Véhicule utilitaire selon l'une ou plusieurs des revendications précédentes, caractérisé en ce que les extrémités avant des parties de fourche (14/1, 14/2) du longeron de châssis (2) sont reliées respectivement par une traverse (20, 21) et la traverse inférieure (20) porte le ou les dispositifs absorbant l'énergie (16).

6. Véhicule utilitaire selon la revendication 1, caractérisé en ce que le pare-chocs (17) est lui-même réalisé comme dispositif absorbant l'énergie ou comme pièce préfabriquée avec le ou les dispositifs absorbant l'énergie (16), à l'extrémité avant des parties inférieures (14/1) de la fourche ou de la traverse (20) qui s'y trouve.

7. Véhicule utilitaire selon l'une des revendications 1 à 5, caractérisé en ce que le pare-chocs (17) est en matière plastique renforcée par des fibres et comporte intérieurement des entretoises transversales auxquelles sont reliés le ou les dispositifs absorbant l'énergie (16).

8. Véhicule utilitaire selon l'une des revendications précédentes, caractérisé en ce que chaque longeron (2) ainsi que la partie supérieure et la partie inférieure de fourche (14/1, 14/2) sont des pièces en tôle matricée.

9. Véhicule utilitaire selon l'une des revendications 1 à 7, caractérisé en ce que chaque longeron (2) ou un segment avant de celui-ci et les deux parties de fourche (14/1, 14/2) correspondantes sont préfabriqués chaque fois comme pièce indépendante et les deux parties de fourche, préfabriquées sont reliées au longeron correspondant (2) ou à son segment de support avant à soudage, vissage ou rivetage.

10. Véhicule utilitaire selon l'une des revendications précédentes, caractérisé en ce que la partie inférieure de fourche (14/1) est formée par la zone d'extrémité en biais, droite ou courbe, dirigée vers le bas de chaque longeron (2).

11. Véhicule utilitaire selon la revendication 10, caractérisé en ce que la partie inférieure de fourche (14/1) est formée par la zone d'extrémité avant d'un segment de châssis avant, lui-même surbaissé à la hauteur (H4) par rapport à la hauteur de châssis (H5) de l'arrière du véhicule.

12. Véhicule utilitaire selon l'une des revendications 1 à 9, caractérisé en ce que la partie inférieure de fourche (14/1) est formée par la zone d'extrémité avant d'un longeron (2) surbaissé à la hauteur (H4) parallèlement à la chaussée, et la partie supérieure de fourche (14/2) dirigée vers l'avant et vers le haut est soit reliée en une seule pièce avec ce longeron, soit soudée, vissée ou rivetée après une fabrication séparée.

13. Véhicule utilitaire selon l'une des revendications précédentes, caractérisé en ce que la partie supérieure de fourche (14/2) de chaque longeron (2) est réalisée pour fixer des pièces ou des équipements du véhicule et comporte des organes de fixation correspondants, tels que des blocs de palier ou des moyens analogues.
